# EUROPÄISCHE PATENTSCHRIFT

(11) **EP 0 889 014 B1**
(45) Veröffentlichungstag und Bekanntmachung des Hinweises auf die Patenterteilung: **28.02.2001**
(21) Anmeldenummer: 97810423.0
(22) Anmeldetag: 01.07.1997
(51) Int. Cl.: C05F 7/00

(54) **Verfahren zur Verarbeitung von Schlamm**
Process for the treatment of sludge
Procédé de traitement des boues d'épuration

(43) Veröffentlichungstag der Anmeldung: 07.01.1999
(73) Patentinhaber: Innoplana Umwelttechnik AG, 8274 Tägerwilen (CH)
(72) Erfinder: Knoer, Peter, 8280 Kreuzlingen (CH); Tschudi, Jean-Pierre, Dr.sc.techn. dipl. Ing. ETH, 2565 Jens (CH)
(74) Vertreter: Quehl, Horst Max, Dipl.-Ing.

(56) Entgegenhaltungen:
- EP-A- 0 781 741
- DE-A- 1 792 218
- US-A- 2 655 883
- US-A- 4 193 206

## Beschreibung

Die Erfindung betrifft ein Verfahren zur Verarbeitung von Schlamm, entsprechend dem Oberbegriff des Patentanspruchs 1.

Bei einem durch die US-A-4193206 bekannten Verfahren dieser Art wird Schlamm bis auf einen Trockengehalt von 80 bis 90 % eingedickt. Beim Extrudieren entsteht ein Schüttgut mit sehr unterschiedlicher Korngrösse, die von mehlig bis grossklumpig reicht, so dass in einer anschliessenden Verfahrensstufe Staub und Granalien mit Unter- oder Uebergrösse zurückzirkuliert werden. Das Verfahren ist entsprechen aufwendig und hat einen hohen Energiebedarf.

Andere Verfahren arbeiten mit Trocknung in einer Wirbelschicht, mit dem Nachteil, dass durch die intensiven Materialbewegungen ein erheblicher Staubanteil vorhanden ist, so dass ebenfalls aufwendige Massnahmen erforderlich sind, um den Staub abzutrennen und zu einer Anfangsstufe des Verfahrens zurückzuführen. Ausserdem sind Massnahmen zur Verhinderung von Staubexplosionen zu treffen.

Es sind auch Verfahren bekannt, bei denen das feuchte Granulat mit sehr hoher Temperatur schockartig erhitzt wird, so dass es an seiner Oberfläche erstarrt und somit ein staubfreies Trocknen möglich wird. Diese Hochtemperaturbehandlung erfordert jedoch eine aufwendigere Anlage mit hitzebeständigen, inertisierten Vorrichtungen.

Durch die DE-A-1792218 sind Verfahren bekannt, bei denen pastöse Abfallprodukte in einer Granuliermaschine mit oszillierendem Rotor zu Granalien mit gleichmässiger Grösse geformt werden, um sie anschliessend in einem Tellergranulator durch Zugabe von z.B. Phosphatmehl und Ammonsulfat oder Bedüsen mittels geschmolzenem Schwefel mit einem Ueberzug zu versehen, so dass nach Abkühlen abriebfeste Granalien entstehen, die sich als Düngemittel ohne Gefahr einer Verstopfung der Streumaschine gleichmässig ausstreuen lassen. Diese Verfahren benötigen eine Granulierbehandlung im Tellergranulator bis die Granalien durch ausreichende Abkühlung ein trockenes, rieselfähiges Produkt bilden.

Der Erfindung liegt die Aufgabe zugrunde, ein Verfahren der eingangs genannten Art zu finden, das mit verhältnismässig geringem apparativem Aufwand und mit geringen Energiekosten ein staubfreies, streufähiges, homogenes Granulat erzeugt und durch das aufwendige Massnahmen für eine Staubabscheidung vermieden werden. Ausserdem soll das Verfahren auch mit kleinen Durchsätzen betreibbar sein.

Die Lösung dieser Aufgabe erfolgt erfindungsgemäss durch die Merkmale des Patentanspruchs 1.

Der geeignete pastöse Zustand, in dem sich überraschenderweise eine zum Granulieren geeignete Oberflächenverfestigung ergibt, kann abhängig von der Art des Klärschlamms bei einem Trockenanteil in der Grössenordnung von 40 bis 60 % erreicht werden. Die anschliessend durch das Extrudieren sich ergebende Vergrösserung der spezifischen Oberfläche und die konstante Granulatgrösse des noch verhältnismässig feuchten Materials führt zu einer energiesparenden, schnellen Trocknung an Luft und dabei zu einer ein Zusammenklumpen und Staubbildung verhindernden Oberflächenverfestigung.

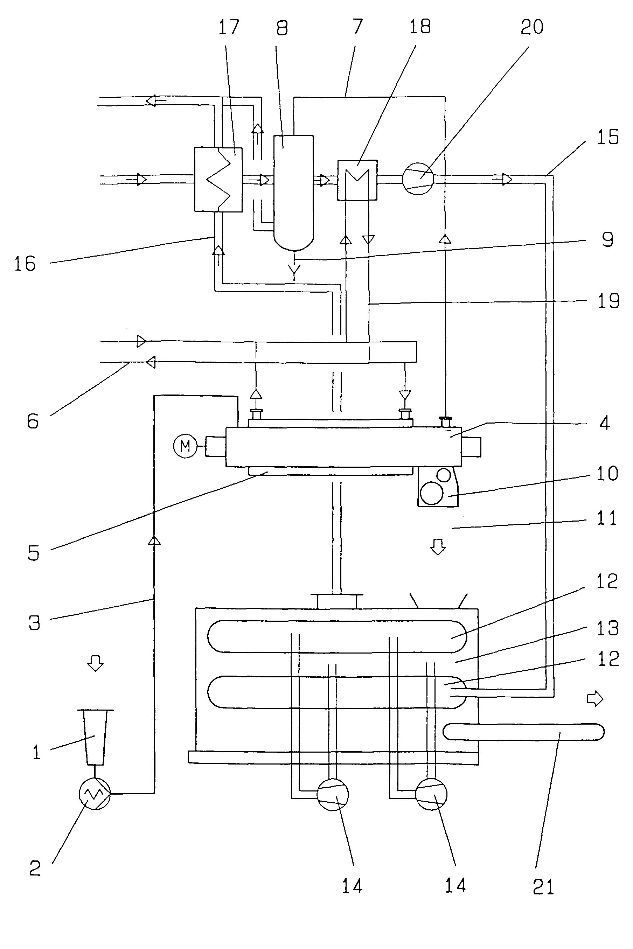

Die Zeichnung zeigt in schematischer Darstellung ein Ausführungsbeispiel einer Anlage für die Durchführung des Verfahrens.

Der beispielsweise durch eine nichtdargestellte Siebbandpresse voreingedickte Klärschlamm gelangt über einen Schacht 1 zu einer Pumpe 2 und durch die Rohrleitung 3 in den Dünnschichtverdampfer 4. Durch den Mantel 5 des Dünnschichtverdampfers 4 zirkuliert ein Wärmeträger, dessen Zu- und Abströmung über das Rohrleitungssystem 6 erfolgt.

Die sich im Dünnschichtverdampfer 4 aus dem Schlamm abscheidenden Dämpfe werden zur Wärmerückgewinnung über eine Leitung 7 abgeführt und über einen Kondensator 8 geleitet. Ihr Kondensat gelangt über den Ablauf 9 zu einer nichtdargestellten Kläranlage zurück. Vorzugsweise wird der Dünnschichtverdampfer 4 mit Ueberdruck betrieben, so dass die zum Kondensator 8 gelangenden Dämpfe eine höhere Temperatur haben und sich folglich ein verbesserter Wärmerückgewinn ergibt. Ein geeigneter Ueberdruck im Dünnschichtverdampfer 4 liegt beispielsweise im Bereich von 0,5 bis 5 bar und vorzugsweise bei 2 bar.

Das bis zu einem pastösen Zustand mit einem Trockenanteil im Bereich von 40 bis 60% vorgetrocknete Schlammaterial gelangt aus dem Dünnschichtverdampfer 4 zu einer als sogenannter Chopper ausgeführten Extrudiervorrichtung 10, in der es mittels Walzen durch Extrudieröffnungen gepresst wird, so dass es in Form von zahlreichen dünnen Strängen stückweise abfällt. Diese Extrudieröffnungen sind in grösserer Anzahl in einer Flachmatritze 11 vorgesehen und haben eine Oeffnungsweite im Bereich von 3 bis 10 mm und vorzugsweise von 5 bis 6 mm. An diesen Extrudieröffnungen erfolgt eine Druckentspannung vom Ueberdruck im Dünnschichtverdampfer 4 auf Atmosphärendruck oder auf den Druck im nachgeschalteten Granulattrockner 13, falls dieser sich über ein geschlossenem Gehäuse anschliesst bzw. die Extrudierung in den Granulattrockner hinein erfolgt. Die Entspannung des Granulats führt dazu, dass aus ihm vermehrt Dämpfe austreten und sich eine poröses Granulat mit entsprechend vergrösserter, das Trocknen begünstigender spezifischer Oberfläche ergibt. Die Porosität des Granulats verbessert auch seine Eigenschaften als Düngemittel.

Auf den luftdurchlässigen Förderbändern 12 des Granulattrokkners 13 wird das Granulat durch Umwälzgebläse 14 und Frischluftzufuhr intensiv einer trocknenden Warmluftströmung ausgesetzt. Die dabei entstehenden Dämpfe werden unter dem Druck der über die Leitung 15 nachströmenden, vorgewärmten Frischluft über die Leitung 16 abgeführt. Dabei wird die Wärme der Dämpfe in einem Wärmetauscher 17 zur Vorwärmung der Frischluft ausgenutzt. Eine weitere Erwärmung der Frischluft erfolgt in dem dem Dünnschichtverdampfer 4 nachgeschalteten Kondensator 8 sowie in einem Nacherhitzer 18, durch den ein Wärmeträger zirkuliert, der von dem Rohrleitungssystem 6 über die Leitung 19 abgezweigt wurde. Ein Gebläse 20 bewirkt die Zwangsströmung der Frischluft durch das beschriebene Vorwärmsystem in den Granulattrockner 13.

Aus dem Granulattrockner 13 fällt das rieselfähig getrocknete Material auf ein Förderband 21, durch das es zu einer nichtdargestellten Abfüllvorrichtung gelangt. Das fertige Granulat hat die erforderliche gute Rieselfähigkeit und Staubfreiheit, um auf einfache Weise in der Landwirtschaft als Düngemittel verwendet zu werden. Zur Beeinflussung der Qualität eines solchen Düngemittelgranulats können dem Schlamm an einer geeigneten Stelle der beschriebenen Verfahrensanlage Zusatzstoffe beigegeben werden.

## Patentansprüche

1. Verfahren zur Verarbeitung von Schlamm, insbesondere von Klärschlamm, mit Voreindampfung, Extrudieren des voreingedampften Materials zur Granulatbildung und Trocknung des Granulats zu einem streufähigen Endprodukt, dadurch gekennzeichnet, dass die Voreindampfung bis zu einem Trockenanteil von 40 bis 60% und einem solchen pastösen Zustand erfolgt, bei dem die Extrudierstränge, vor ihrer Ablösung von einer Extrudierdüse, in Kontakt mit Luft, eine das Zusammenkleben von sich durch diese Ablösung bildenden Granulatteilen und eine Staubentwicklung verhindernde, dünne Haut erhalten.

2. Verfahren nach Anspruch 1, dadurch gekennzeichnet, dass die Voreindampfung bei Ueberdruck erfolgt.

3. Verfahren nach Anspruch 2, dadurch gekennzeichnet, dass die Voreindampfung bei einem UUeberdruck von 0,5 bis 5 bar, vorzugsweise bei 2 bar erfolgt.

4. Verfahren nach einem der Ansprüche 1 bis 3, dadurch gekennzeichnet, dass die Voreindampfung in einem Dünnschichtverdampfer erfolgt.

5. Verfahren nach einem der Ansprüche 1 bis 4, dadurch gekennzeichnet, dass Zuluft für die Trocknung des Granulats zuerst über einen Wärmetauscher (17) zur Rückgewinnung der Abluftwärme und danach über einen Kondensator (8) zur Rückgewinnung der latenten Wärme des Dampfes aus dem Dünnschichtverdampfer (4) geführt wird.

6. Verfahren nach einem der Ansprüche 1 bis 5, dadurch gekennzeichnet, dass das pastöse Material beim Verlassen des Extruders (10) durch eine Flachmatritze (11) mit zahlreichen Oeffnungen gedrückt wird, deren Oeffnungsweite im Bereich von 3 bis 10 mm, vorzugsweise von 5 bis 6 mm, liegt, so dass es an diesen Oeffnungen vom Druck der Voreindampfung auf atmosphärischen Druck oder auf den Druck im nachgeschalteten Granulattrockner (13) entspannt wird.

7. Verfahren nach einem der Ansprüche 1 bis 6, dadurch gekennzeichnet, dass zur Herstellung von Düngemittelgranulat dem Schlamm oder dem flüssigen Vorprodukt des Schlammes Zusatzstoffe beigegeben werden, die die Düngemittelqualität beeinflussen.

## Claims

1. Process for the treatment of sludge, particularly sewage sludge, with pre-evaporation, extrusion of the pre-evaporated material for forming granules and drying the granules to a spreadable end product, characterized in that pre-evaporation takes place to a dry fraction of 40 to 60% and a pasty state such that prior to their detachment from an extrusion die and in contact with air, the extruded strands acquire a thin skin preventing the agglutination of granular material parts forming as a result of this detachment and the production of dust.

2. Process according to claim 1, characterized in that pre-evaporation takes place under an overpressure.

3. Process according to claim 2, characterized in that pre-evaporation takes place at an overpressure of 0.5 to 5 bar, preferably at 2 bar.

4. Process according to one of the claims 1 to 3, characterized in that pre-evaporation takes place in a film-type evaporator.

5. Process according to one of the claims 1 to 4, characterized in that the inflow air for drying the granular material is firstly passed via a heat exchanger (17) for the recovery of the spent air heat and then via a condenser (8) for the recovery of the latent heat of the vapour from the film-type evaporator (4).

6. Process according to one of the claims 1 to 5, characterized in that when the pasty material leaves the extruder (10) it is pressed through a flat matrix (11) having numerous openings, whose opening width is in the range 3 to 10 mm, preferably 5 to 6 mm, so that at said openings it is lowered from the pre-evaporation pressure to atmospheric pressure or the pressure in the downstream granular material dryer (13).

7. Process according to one of the claims 1 to 6, characterized in that for the production of the fertilizer granular material, to the sludge or the liquid preproduct of the sludge are added additives, which influence the fertilizer quality.

## Revendications

1. Procédé pour le traitement de boues, en particulier de boues d'épuration, avec réduction préalable, extrusion de la matière réduite en vue de former des granulés et séchage des granulés pour obtenir un produit fini pouvant être épandu, caractérisé en ce que la réduction préalable est effectuée jusqu'à obtenir une proportion de matière sèche de 40 à 60 % et un état pâteux, dans lequel les brins extrudés acquièrent au contact de l'air, avant leur détachement de la buse d'extrusion, une fine pellicule empêchant l'adhérence entre eux des granulés formés par ce détachement ainsi que la formation de poussière.

2. Procédé selon la revendication 1, caractérisé en ce que la réduction préalable a lieu sous surpression.

3. Procédé selon la revendication 2, caractérisé en ce que la réduction préalable a lieu à une surpression de 0,5 à 5 bar, de préférence à 2 bar.

4. Procédé selon l'une quelconque des revendications 1 à 3, caractérisé en ce que la réduction préalable se fait dans un évaporateur à couche mince.

5. Procédé selon l'une quelconque des revendications 1 à 5, caractérisé en ce que l'air amené pour le séchage des granulés sort de l'évaporateur à couche mince (4) en passant d'abord par un échangeur de chaleur (17) pour récupérer la chaleur de l'air sortant puis par un condenseur (8) pour récupérer la chaleur latente de la vapeur.

6. Procédé selon l'une quelconque des revendications 1 à 5, caractérisé en ce que la matière pâteuse est pressée, en sortant de l'extrudeuse (10), à travers une matrice plate (11) comportant de nombreuses ouvertures dont la largeur est comprise entre 3 et 10 mm, de préférence entre 5 et 6 mm, de sorte qu'une détente se produit au niveau de ces ouvertures entre la pression de réduction préalable et la pression atmosphérique ou la pression dans le séchoir à granulés (13) monté en aval.

7. Procédé selon l'une quelconque des revendications 1 à 6, caractérisé en ce que pour produire des granulés de fertilisants, la boue ou le produit liquide précurseur de la boue sont additionnés d'additifs influençant la qualité du fertilisant.
